# EUROPÄISCHE PATENTSCHRIFT

(11) **EP 3 215 402 B1**
(45) Veröffentlichungstag und Bekanntmachung des Hinweises auf die Patenterteilung: **11.12.2019**
(21) Anmeldenummer: 15787896.8
(22) Anmeldetag: 22.10.2015
(51) Int. Cl.: B60R 16/037

(54) **AUTOMATISCHES EINSTELLEN VON NUTZERDATEN IN EINEM KRAFTFAHRZEUG**
METHOD FOR AUTOMATICALLY SETTING USER DATA IN A MOTOR VEHICLE
RÉGLAGE AUTOMATIQUE DE DONNEES D'UTILISATEUR DANS UN VÉHICULE AUTOMOBILE

(30) Priorität: 08.11.2014 DE 102014016532
(43) Veröffentlichungstag der Anmeldung: 13.09.2017
(73) Patentinhaber: Audi AG, 85045 Ingolstadt (DE)
(72) Erfinder: ENGELHARD, Lars, 85304 Ilmmünster (DE); ENGELHARD, Stefanie, 85304 Ilmmünster (DE)
(86) Internationale Anmeldenummer: PCT/EP2015/002099
(87) Internationale Veröffentlichungsnummer: WO 2016/070960

(56) Entgegenhaltungen:
- DE-A1-102004 032 983
- DE-A1-102012 002 758
- DE-A1-102012 020 614
- DE-A1-102012 024 010
- DE-A1-102013 006 087
- DE-A1-102013 015 737
- US-A1- 2013 124 009

## Beschreibung

Die Erfindung betrifft ein Verfahren zum Einstellen von Nutzerdaten in einem Kraftfahrzeug eines ersten Fahrzeugtyps. Das Kraftfahrzeug soll durch Einstellen der Nutzerdaten für einen Neubenutzer personalisiert werden. Der Neubenutzer benutzt das Kraftfahrzeug zum ersten Mal. Es sollen für zumindest ein Gerät des Kraftfahrzeugs Konfigurationsdaten eingestellt werden, um so Komforteinstellungen für den Neubenutzer vorzunehmen, oder Personendaten des Neubenutzers ermittelt werden. Zu der Erfindung gehört auch eine Servervorrichtung für das Internet, mittels welcher die Nutzerdaten ermittelt werden können.

Bei der Personalisierung von Fahrzeugen können pro Fahrzeug die Einstellungen des Fahrers gespeichert werden. Bei den Einstellungen handelt es sich um Komforteinstellungen, wie Sitzeinstellung, Spiegeleinstellung und Gurthöheneinstellung.

Aus dem Stand der Technik ist bekannt, diese Komforteinstellungen auf ein anderes Kraftfahrzeug zu übertragen. So ist aus der DE 10 2012 020 614 A1 ein Verfahren zum Personalisieren einer Fahrzeugfunktion bekannt, bei welchem eine erste Kennung eines ersten Fahrzeugnutzer anlässlich einer ersten Sitzung in einem ersten Fahrzeug ermittelt wird und eine Information über eine Betätigung einer Funktion des ersten Fahrzeugs durch den Fahrzeugnutzer erfasst wird. Es wird eine Zuordnung der erfassten Informationen zu der ermittelten Kennung ermittelt und abgespeichert. Die abgespeicherte Zuordnung kann in einer zweiten Sitzung in dem ersten Fahrzeug oder in einem anderen Fahrzeug genutzt werden.

Um es einem Neubenutzer eines Kraftfahrzeugs einfacher zu machen, das Kraftfahrzeug für sich zu personalisieren, sind aus der US 2013/0124009 A1 Eingabemasken oder Templates bekannt, aus denen der Benutzer eine auswählen kann, um bereits geeignete Voreinstellungen zu erhalten. Die Masken können in einem Server des Internets gespeichert sein und von diesem aus im Kraftfahrzeug bereitgestellt werden.

Aus der DE 10 2012 024 010 A1 ist bekannt, auf einem Server ein Benutzerprofil zu speichern, um das Benutzerprofil bedarfsweise in ein Kraftfahrzeug zu übertragen, wenn in dem Kraftfahrzeug ein Benutzer sitzt, für den das Benutzerprofil bestimmt ist.

Bei dem aus dem Stand der Technik bekannten Verfahren wird stets davon ausgegangen, dass die Konfigurationseinstellung für ein bestimmtes Gerät eines Kraftfahrzeugs auch in einem anderen Kraftfahrzeug sinnvoll genutzt werden können. Dies ist aber in der Regel nur der Fall, wenn beide Kraftfahrzeuge vom selben Fahrzeugtyp sind. In der Regel ergibt sich keine Übertragbarkeit auf andere Fahrzeugtypen, da der Innenraum sehr unterschiedlich ausgestaltet ist und damit die Komforteinstellungen variieren. Sitzeinstellungen, die Ausrichtung eines Gebläseauslasses der Klimaanlage und Einstellungen der Spiegel sind in der Regel für ein und dieselbe Person vom Fahrzeugtyp abhängig, so dass eine Übertragung von Konfigurationsdaten für Geräte eines Kraftfahrzeugs eines ersten Fahrzeugtyps nicht sinnvoll in einem Kraftfahrzeug eines zweiten Fahrzeugtyps genutzt werden können.

In der DE 10 2013 006 087 A1 ist ein Verfahren zum Einstellen von fahrer- und kraftfahrzeugspezifischen Konfigurationsparametern in einem Kraftfahrzeug gemäß einem Nutzerprofil mittels eines mobilen Kommunikationsendgeräten offenbart. Das Verfahren umfasst das Speichern des Nutzerprofils, dass Profildaten aufweist. Zumindest ein Teil der Profildaten ist auf dem mobilen Kommunikationsendgerät gespeichert. Gemäß des Verfahrens werden zusätzliche Profildaten, die auf einem über Internet erreichbaren Server gespeichert sind sukzessive an eine Recheneinheit des Kraftfahrzeugs übertragen.

Der Erfindung liegt die Aufgabe zugrunde, einen Neubenutzer, welcher ein Kraftfahrzeug eines ersten Fahrzeugtyps benutzen möchte, beim Einstellen von Nutzerdaten in dem Kraftfahrzeug technisch zu unterstützen.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Bei der Erfindung wird davon ausgegangen, dass für die Personalisierung des Kraftfahrzeugs Nutzerdaten benötigt werden. Diese Nutzerdaten umfassen zum einen Personendaten des Neubenutzers, also beispielsweise seine Körpergröße, und zum anderen Geräte-Konfigurationsdaten für zumindest ein Gerät des Kraftfahrzeugs, also beispielsweise eine einzustellende Sitzposition eines verstellbaren Fahrersitzes. Erfindungsgemäß wird ein Verfahren zum Einstellen dieser Nutzerdaten eines Neubenutzers in einem Kraftfahrzeug eines ersten Fahrzeugtyps bereitgestellt. Dabei soll der Neubenutzer selbst möglichst wenig Bedienschritte vornehmen müssen. In dem erfindungsgemäßen Verfahren werden deshalb von mehreren anderen Benutzern des ersten Fahrzeugtyps deren Personendaten und deren Konfigurationsdaten gesammelt. Beispielsweise wird also von den anderen Benutzern deren Körpergröße einerseits und die vorgenommene Sitzeinstellung für den Fahrersitz andererseits gesammelt. Die anderen Benutzer müssen dabei nicht dasselbe Kraftfahrzeug benutzen wie der Neubenutzer. Es reicht aus, wenn die anderen Benutzer Kraftfahrzeuge desselben ersten Fahrzeugtyps benutzen. Aus den gesammelten Personendaten und den gesammelten Konfigurationsdaten wird eine Zuordnungsvorschrift zwischen Personendaten und Konfigurationsdaten gebildet. Diese Zuordnungsvorschrift stellt eine Schwarmintelligenz dar. Beispielsweise wird also unterschiedlichen Werten für die Körpergröße jeweils eine Sitzeinstellung eines Fahrersitzes zugeordnet.

Von dem Neubenutzer wird nur ein Teil der von ihm benötigten Nutzerdaten erfasst. In dem Beispiel also seine Körpergröße oder die von ihm vorgenommene Einstellung des Fahrersitzes. In einem weiteren Schritt werden die vom Neubenutzer benötigten Nutzerdaten vervollständigt. Hierzu werden auf Grundlage des erfassten Teils der Nutzerdaten des Neubenutzers mittels der Zuordnungsvorschrift die noch fehlenden Personendaten und/oder Konfigurationsdaten ermittelt. In dem Beispiel kann also von der Körpergröße auf die benötigte Sitzeinstellung oder von der Sitzeinstellung auf die Körpergröße des Neubenutzers geschlossen werden. Die vervollständigten Nutzerdaten werden in dem Verfahren dann in dem Kraftfahrzeug eingestellt.

Bei den Personendaten im Sinne der Erfindung handelt es sich insbesondere um rein personenbezogene, d.h. fahrzeugunabhängig ermittelbare Daten. Diese Personendaten können beispielsweise die Körpergröße oder ein anderes Körpermaß, das Körpergewicht, das Lebensalter und/oder das Geschlecht des Neubenutzers umfassen. Es kann auch beispielsweise von den Personendaten eine Angabe umfasst sein, ob der Neubenutzer Brillenträger ist. Auch ein Musikgeschmack und/oder Interessensgebiete bei den Nachrichten können davon umfasst sein.

Bei den Konfigurationsdaten handelt es sich im Gegensatz dazu um Geräteeinstellungen des zumindest einen Geräts. Die Konfigurationsdaten sind insbesondere personenunabhängig ermittelbar, das heißt es handelt sich jeweils um eine Geräteeinstellung, die beispielsweise aus einem Konfigurationsspeicher des Geräts ausgelesen werden kann. Insbesondere handelt es sich bei den Konfigurationsdaten um Komforteinstellungen, das heißt das zumindest eine Gerät stellt ein Komfortgerät dar, wie beispielsweise ein Infotainmentsystem, ein Klimatisierungssystem, ein Spiegelpositionierungssystem und/oder eine Fahrzeugsitz-Steuerung. Als Konfigurationsdaten werden entsprechend insbesondere eine Sitzposition, eine Spiegelneigung, eine Radiolautstärke, eine Gurthöhe, eine Lenkradposition eines einstellbaren Lenkrads, eine Sitzheizungseinstellung, Favoriten bei Radiostationen und/oder eine Klimatisierungseinstellung ermittelt.

Durch die Erfindung ergibt sich in vorteilhafter Weise eine Personalisierung der Komforteigenschaften im Kraftfahrzeug auch über verschiedene Fahrzeugtypen hinweg ermöglicht wird. Der Neubenutzer kann in das Kraftfahrzeug eines ersten Fahrzeugtyps einsteigen und muss nicht sämtliche Nutzerdaten, das heißt seine Personendaten und seine Konfigurationsdaten, eingeben, um das Kraftfahrzeug für sich zu personalisieren. Es reicht also beispielsweise, dass er seine Körpergröße angibt. Dann ist es mittels der Zuordnungsvorschrift möglich, für den Neubenutzer beispielsweise die Sitzposition und/oder eine Spiegelposition und/oder eine Ausrichtung eines Gebläseauslasses einer Klimatisierungseinrichtung einzustellen. In Abhängigkeit von einer Altersangabe als weiterer Personendaten des Neubenutzers kann beispielsweise eine Einstellung für eine Sitzheizung und/oder einer Raumlufttemperatur oder favorisierter Radiostationen mittels der Zuordnungsvorschrift ermittelt werden.

Die Ermittlung der Zuordnungsvorschrift kann z.B. mittels eines an sich bekannten Ansatzes der Datenanalyse aus dem Bereich der BigData-Analyse erfolgen. Es können bei der Zuordnungsvorschrift beispielsweise die Personendaten in Personengruppen eingeteilt werden. Beispielsweise können Benutzer gleicher oder ähnlicher Körpergröße, deren Körpergröße also in einem vorbestimmten Intervall liegt, beispielsweise 175 Zentimeter bis 185 Zentimeter, einer Personengruppe zugeordnet werden. Dann kann ermittelt werden, welche Konfigurationsdaten die Benutzer aus dieser Personengruppe eingestellt haben. Beispielsweise können also die Sitzpositionen der Benutzer aus der Personengruppe ermittelt werden. Dann kann beispielsweise der statistische Mittelwert der Geräteeinstellungen für ein bestimmtes Gerät für die Personengruppe ermittelt werden, also beispielsweise die statistische mittlere Sitzposition für alle Benutzer der Personengruppe. Wie weiter unten noch genau beschrieben wird, kann auch innerhalb einer Personengruppe eine Unterteilung nach Nutzertypen vorgenommen werden, so dass sich mehrere unterschiedliche Konfigurationsdatensätze pro Personengruppe ergeben können.

Es kann vorkommen, dass die Personalisierung hierbei nicht perfekt ist. In der Erfindung wird nach dem Einstellen der vervollständigten Nutzerdaten eine von dem Neubenutzer vorgenommene Veränderung der Geräte-Konfigurationsdaten ermittelt. Beispielsweise kann es vorkommen, dass der Benutzer die Sitzposition ändert, weil er es vorzieht, besonders nahe am Lenkrad zu sitzen oder besonders weit zurückgelehnt im Fahrzeugsitz zu liegen. Diese personenspezifische Abweichung vom statistischen Mittelwert, wie ihn die Gesamtheit der anderen Benutzer repräsentiert, wird dann unter Umständen nicht durch die Zuordnungsvorschrift berücksichtigt. Die Korrekturdaten spiegeln eine persönliche Vorliebe des Neubenutzers betreffend die Nutzung des zumindest einen Geräts des Kraftfahrzeugs des ersten Fahrzeugtyps wider. Nimmt der Neubenutzer eine Änderung vor, so wird dies bei dieser Ausführungsform der Erfindung ermittelt. In Abhängigkeit von den veränderten Konfigurationsdaten werden dann nutzerspezifische Korrekturdaten ermittelt. Beispielsweise kann die Differenz zwischen den Nutzerdaten, wie sie zunächst mittels der Zuordnungsvorschrift für den Neubenutzer ermittelt worden sind und den vom Neubenutzer im Nachhinein eingestellten veränderten Konfigurationsdaten ermittelt werden. Es kann auch eine relative Änderung der Konfigurationsdaten ermittelt werden. Durch die Erfindung ergibt sich der Vorteil, dass zusätzlich zu der Zuordnungsvorschrift, die beispielsweise nur einen statistischen Mittelwert für die Konfigurationsdaten der anderen Benutzer ausgeben kann, eine nutzerspezifische Korrekturmöglichkeit bereitgestellt wird.

Indem die nutzerspezifischen Korrekturdaten getrennt von der Zuordnungsvorschrift gespeichert oder bereitgestellt werden, führt die Erfindung zu einem weiteren Vorteil. Bei einem Wechsel des Neubenutzers von dem Kraftfahrzeug des ersten Fahrzeugtyps zu einem Kraftfahrzeug eines anderes, zweiten Fahrzeugtyps, können nämlich die Konfigurationsdaten für das Kraftfahrzeug des zweiten Fahrzeugtyps auf der Grundlage der Korrekturdaten automatisch gemäß den Vorlieben des Neubenutzers korrigiert werden. Es lassen sich also die persönlichen Vorlieben des Neubenutzers zwischen Fahrzeugtypen übertragen. Beispielsweise können zunächst bei dem Kraftfahrzeug des zweiten Fahrzeugtyps die Geräte-Konfigurationsdaten mittels des beschriebenen Verfahrens auf der Grundlage einer Zuordnungsvorschrift für den zweiten Fahrzeugtyp vorgenommen werden. Auch bei dem Kraftfahrzeug des zweiten Fahrzeugtyps steht dann aber zu erwarten, dass der Neubenutzer die Konfigurationsdaten gemäß seiner persönlichen Vorliebe anpassen würde, also z.B. den Fahrersitz steiler oder flacher einstellen würde. Für den Neubenutzer können dann diese Vorlieben auf der Grundlage mittels der nutzerspezifischen Korrekturdaten automatisch berücksichtigt werden. Dann erspart sich der Neubenutzer das Korrigieren der Konfigurationsdaten im Kraftfahrzeug des zweiten Fahrzeugtyps.

Hierbei kann es problematisch sein, wenn die Korrekturdaten absolute Angaben enthalten, beispielsweise eine Verschiebung des Fahrzeugsitzes um zehn Zentimeter oder das Verschwenken eines Gebläseauslasses um fünf Grad. Bei einem Kraftfahrzeug des zweiten Fahrzeugtyps kann es aber notwendig sein, hier andere absolute Einstellungsdaten vorzunehmen, um der Vorliebe des Neubenutzers zu entsprechen. Für dieses Problem sieht eine Weiterbildung der Erfindung vor, dass die Vorliebe des Neubenutzers nicht als absolute Korrekturwertangabe, sonders ans Nutzertyp, z.B. Steilsitzfahrer oder Liegesitzfahrer, angegeben wird. Für unterschiedliche, vorbestimmte Nutzertypen werden also jeweilige Konfigurationsdaten für den zweiten Fahrzeugtyp bereitgestellt. Im Zusammenhang mit der Erfindung ist unter einem Nutzertyp zu verstehen, dass persönliche Vorlieben bei der Einstellung von Konfigurationsdaten berücksichtigt werden, also beim Einstellen eines Fahrzeugsitzes beispielsweise eine besonders steile Ausrichtung der Rückenlehne oder eine besonders flache Ausrichtung, wobei besonders steil oder besonders flach eine Abweichung vom statistischen Mittelwert bedeutet, der beispielsweise auf der Grundlage der anderen Benutzer ermittelt werden kann. Eine persönliche Vorliebe kann beispielsweise auch Rundfunkprogramme oder Einstellungen bei der Klimatisierung betreffen. Durch die Nutzertypen wird innerhalb einer Gruppe von Benutzern unterschieden, deren Personendaten gemäß einem vorbestimmten Ähnlichkeitskriterium gleich sind, also die aufgrund ihrer Personendaten einer vorbestimmten Personengruppe zuzuordnen sind. Es können also beispielsweise Personengruppen gebildet werden, in welche Personen zugeordnet werden, die deren Körpergröße in einem vorbestimmten Intervall, beispielsweise von 175 Zentimeter bis 185 Zentimeter, liegt. Für diese Personengruppe können dann beispielsweise drei Nutzertypen für Sitzeinstellungen definiert werden, beispielsweise Steilsitz, Normalsitz, Liegesitz. Für Klimatisierung kann dann beispielsweise tief anströmen, normal anströmen und hoch anströmen bei dem Gebläseauslass eingestellt sein.

Für den Neubenutzer kann mittels dessen Korrekturdaten aus dem Kraftfahrzeug des ersten Fahrzeugtyps, die ja ebenfalls eine Abweichung vom statistischen Mittelwert beschreiben, aus den Nutzertypen einer ausgewählt werden. Mit anderen Worten wird der Neubenutzer einem aus den Nutzertypen zugeordnet. In Abhängigkeit von dem ermittelten Nutzertyp des Neubenutzers werden dann die bereitgestellten, zugehörigen Konfigurationsdaten für diesen Nutzertyp in dem Kraftfahrzeug des zweiten Fahrzeugtyps eingestellt. Hierdurch ergibt sich der Vorteil, dass auch die persönliche Vorliebe des Neubenutzers betreffend die Nutzung zumindest eines Geräts im Kraftfahrzeugs des zweiten Fahrzeugtyps keine absoluten Korrekturangaben, wie beispielsweise "Sitz zehn Zentimeter nach vorne verschieben", nötig sind. Stattdessen werden für den Nutzertyp des Neubenutzers Konfigurationsdaten bereitgestellt, die im zweiten Fahrzeugtyp für den Nutzertyp geeignet sind. Die Konfigurationsdaten für jeden Nutzertyp können wieder in der beschriebenen Weise auf Grundlage von anderen Benutzern des zweiten Fahrzeugtyps ermittelt werden.

Die erfindungsgemäß ermittelte Zuordnungsvorschrift kann aber auch anders herum genutzt werden. In einer Ausführungsform der Erfindung werden in dem Kraftfahrzeug an dem zumindest einen Gerät des Kraftfahrzeugs des ersten Fahrzeugtyps Konfigurationsdaten erfasst, welche der Benutzer an dem zumindest einen Gerät eingestellt hat. Mittels der Zuordnungsvorschrift werden dann Personendaten des Neubenutzers ermittelt. Beispielsweise kann man mittels der Zuordnungsvorschrift von einer Sitzeinstellung auf eine Körpergröße des Neubenutzers schließen. Hierdurch ergibt sich der Vorteil, dass auf Grundlage der so ermittelten Personendaten wiederum ein anderes System, beispielsweise ein Sicherheitssystem des Kraftfahrzeugs, an den Neubenutzer angepasst werden kann. Beispielsweise kann die ermittelte Körpergröße dazu genutzt werden, ein Gurtrückhaltesystem des Kraftfahrzeugs an den Neubenutzer anzupassen.

Das Ermitteln geeigneter Geräte-Konfigurationsdaten kann durch das Sammeln der Nutzerdaten anderer Benutzer noch weiter verfeinert werden. Eine Weiterbildung der Erfindung sieht hierzu vor, dass beim Sammeln der Konfigurationsdaten der anderen Benutzer zusätzlich Umfelddaten gesammelt werden, welche angeben, in welchem Umfeld die anderen Benutzer jeweils die Konfigurationsdaten einstellen. Umfelddaten können beispielsweise das zeitliche Umfeld, wie etwa die Uhrzeit, die Tageszeit, die Jahreszeit, beschreiben. Die Umfelddaten können zusätzlich oder alternativ auch eine Region beschreiben, wobei hier Regionen beispielsweise durch kulturelle Unterschiede oder marktspezifische Unterschiede gegeneinander abgegrenzt sein können. Beispielsweise kann in einem asiatischen Raum eine andere Konfiguration oder Komforteinstellung typisch sein als beispielsweise in einem europäischen Raum. Die Umfelddaten können auch Wetterinformationen betreffen. So kann beispielsweise unterschieden werden, welche Konfigurationsdaten bei Sonnenschein einerseits und bei Regen andererseits von dem jeweiligen anderen Benutzer eingestellt wurden. Möchte nun der Neubenutzer das Kraftfahrzeug des ersten Fahrzeugtyps nutzen, so wird bei dieser Weiterbildung beim Vervollständigen der Nutzerdaten des Neubenutzers ermittelt, in welchem Umfeld sich sein Kraftfahrzeug befindet. Die Nutzerdaten des Neubenutzers werden dann mit Konfigurationsdaten für das ermittelte Umfeld ergänzt. Ist bei dem ersten Fahrzeugtyp beispielsweise das Problem vorhanden, dass bei Sonnenschein ein Fahrer mit der Körpergröße des Neubenutzers geblendet wird, so werden die anderen Benutzer mit der Körpergröße des Neubenutzers typischerweise bei Sonnenschein beispielsweise eine Sonnenblende ausgefahren haben. Benutzt nun der Neubenutzer sein Kraftfahrzeug des ersten Fahrzeugtyps, so wird bei Sonnenschein für den Neubenutzer automatisch, das heißt durch eine Steuereinrichtung des Kraftfahrzeugs, ebenfalls die Sonnenblende ausgefahren, ohne dass der Neubenutzer dies von sich aus veranlassen musste.

In einer Ausführungsform der Erfindung werden von dem Neubenutzer Personendaten erfasst und mittels der Zuordnungsvorschrift Konfigurationsdaten für das zumindest eine Gerät ermittelt und in dem zumindest einen Gerät eingestellt. Hierdurch ergibt sich der Vorteil, dass sich der Benutzer nicht mit der Bedienung des Kraftfahrzeugs vertraut machen muss, um das Kraftfahrzeug für sich zu personalisieren. Es reicht, wenn er seine persönlichen Daten, das heißt seine Personendaten, angibt oder von einem anderen, zuvor benutzen Kraftfahrzeug übertragen lässt. Das Kraftfahrzeug des ersten Fahrzeugtyps wird dann mittels des Verfahrens selbsttätig die Personalisierung durchführen können. Das zuvor benutzte Kraftfahrzeug kann dabei von einem anderen Fahrzeugtyp sein.

Auch die Komfortgeräte können auf dieser Grundlage angepasst werden. So sieht eine Ausführungsform der Erfindung vor, dass das Kraftfahrzeug zumindest ein erstes und ein zweites Gerät aufweist und dabei die Konfigurationsdaten, die der Neubenutzer eingestellt hat, an dem ersten Gerät erfasst werden. Beispielsweise kann also die Sitzeinstellung erfasst werden, die der Neubenutzer in dem Kraftfahrzeug eingestellt hat. Anhand der erfassten Konfigurationsdaten können dann in der beschriebenen Weise mittels der Zuordnungsvorschrift Personendaten des Neubenutzers ermittelt werden, beispielsweise seine Körpergröße. In Abhängigkeit von den ermittelten Personendaten werden dann wiederum mittels der Zuordnungsvorschrift Konfigurationsdaten für das zweite Gerät ermittelt. Die ermittelten Konfigurationsdaten für das zweite Gerät werden dann bei diesem eingestellt. Beispielsweise kann also ein Rückspiegel des Kraftfahrzeugs ohne ein Zutun des Neubenutzers motorisch eingestellt werden, nachdem der Neubenutzer den Fahrzeugsitz selbst eingestellt hat. Die geeignete Spiegelposition kann dabei auf der Grundlage der Personendaten des Neubenutzers ermittelt werden, nämlich beispielsweise seiner Körpergröße.

Zum Durchführen des Verfahrens hat es sich als besonders vorteilhaft erwiesen, eine zentrale Servervorrichtung im Internet zu nutzen. Entsprechend umfasst die Erfindung eine Servervorrichtung für das Internet, also beispielsweise einen Servercomputer oder eine Anordnung aus mehreren Servercomputern. Die Servervorrichtung ist mit einer Kommunikationseinrichtung zum jeweiligen Austauschen von Nutzerdaten mit mehreren Kraftfahrzeugen eines ersten Fahrzeugtyps ausgestattet. Die Servervorrichtung weist des Weiteren eine Prozessoreinrichtung auf, die dazu ausgelegt ist, eine Ausführungsform des erfindungsgemäßen Verfahrens durchzuführen. Die Servervorrichtung kann so einerseits von Kraftfahrzeugen, die von den anderen Benutzern benutzt werden, Personendaten und Konfigurationsdaten sammeln oder empfangen und andererseits an das Kraftfahrzeug, welches der Neubenutzer nutzen möchte, dessen vervollständigte Nutzerdaten ausgeben.

Im Folgenden ist ein Ausführungsbeispiel der Erfindung beschrieben. Hierzu zeigt:
- Fig. 1: eine schematische Darstellung einer Ausführungsform der erfindungsgemäßen Servervorrichtung, und
- Fig. 2: eine schematische Darstellung einer Szene, in welcher durch die Servervorrichtung von Fig. 1 zwei Kraftfahrzeuge personalisiert werden.

Bei dem im Folgenden erläuterten Ausführungsbeispiel handelt es sich um eine bevorzugte Ausführungsform der Erfindung.

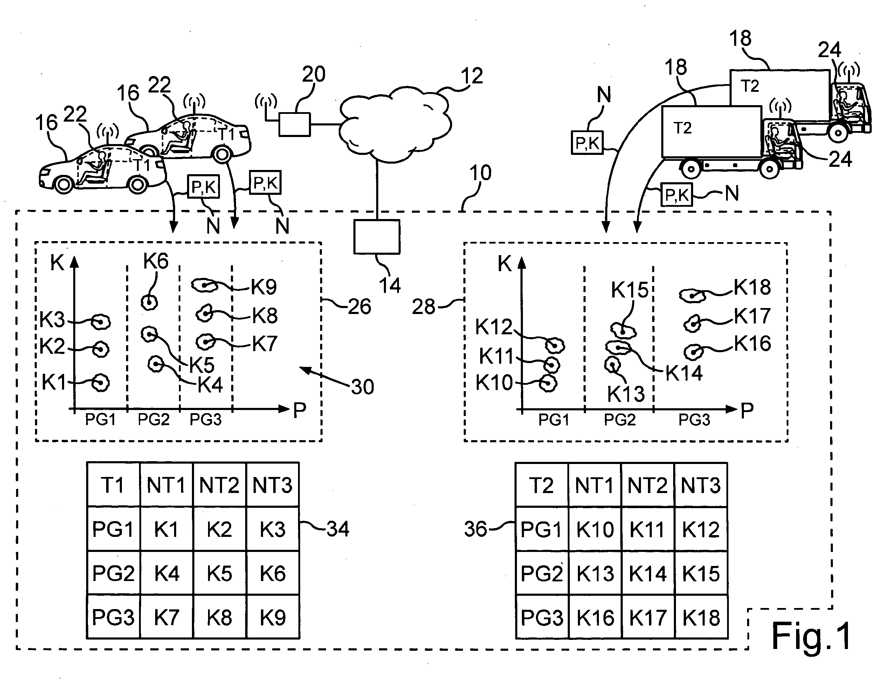

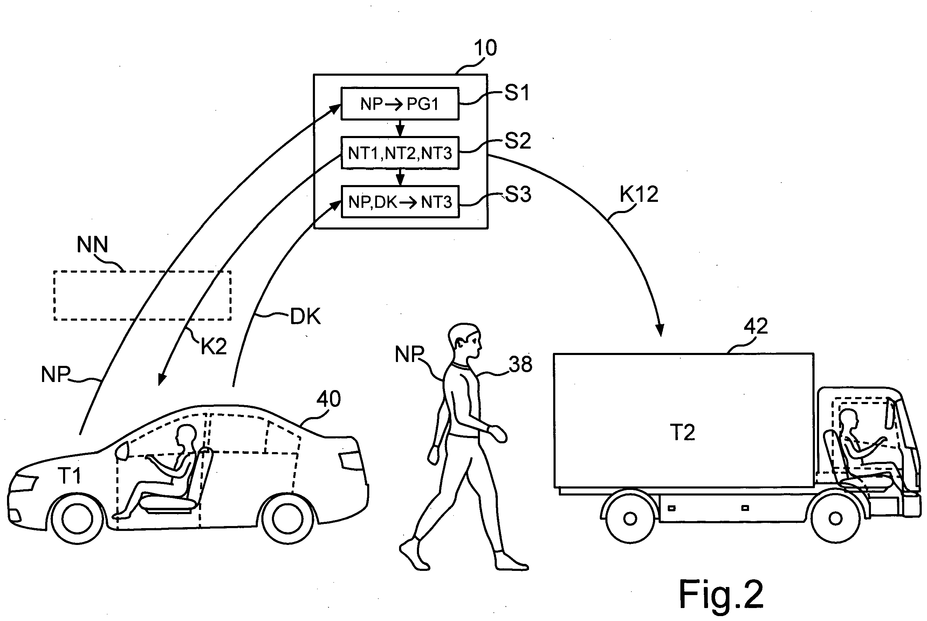

Durch die Erfindung können auf der Grundlage einiger anfänglich gegebenen oder errechneten Informationen, wie Größe und Gewicht des Fahrers, mittels Schwarmintelligenz Komforteinstellungen von einem Fahrzeugtyp zum anderen umgerechnet werden. Dies kann in zwei Phasen geschehen. Eine erste Phase ist in Fig. 1 veranschaulicht und eine zweite Phase in Fig. 2.

Das Verfahren kann durch eine Servervorrichtung oder ein Backend 10 durchgeführt werden, bei dem es sich um einen beispielsweise an das Internet 12 angeschlossenen Servercomputer handeln kann. Das Backend 10 kann eine Kommunikationseinrichtung 14 aufweisen, über welche das Backend 10 Daten über das Internet 12 mit Kraftfahrzeugen 16, 18 austauschen kann. Die Kraftfahrzeuge 16, 18 können hierzu die Daten beispielsweise über eine Mobilfunkverbindung oder eine WLAN -Verbindung (WLAN - wireless local area network) über ein Mobilfunknetz 20 oder einen Router in das Internet 12 und von dort zur Kommunikationseinrichtung 14 übertragen. Die Kommunikationseinrichtung 14 kann beispielsweise durch eine Ethernet-Schnittstelle bereitgestellt sein.

In Fig. 1 ist veranschaulicht, dass die Kraftfahrzeuge 16 von einem ersten Fahrzeugtyp T1 und die Kraftfahrzeuge 18 von einem zweiten Fahrzeugtyp T2 sein können, wobei sich die Fahrzeugtypen T1, T2 baulich unterscheiden. Beispielsweise kann es sich bei dem Fahrzeugtyp T1 um ein Cabrio oder eine Sportwagen handeln, während es sich bei dem Fahrzeugtyp T2 beispielsweise um einen SUV (sport utility vehicle) oder eine Großraumlimousine oder einen Lastkraftwagen handeln kann.

Die erste Phase beinhaltet das Sammeln von Nutzerdaten N verschiedener Fahrer 22, 24 der Kraftfahrzeuge 16, 18. Eine Anzahl der Fahrer 22, 24 kann jeweils beispielsweise für jeden Fahrzeugtyp T1, T2 mehr als zwanzig oder mehr als fünfzig oder mehr als hundert oder mehr als fünfhundert betragen. Es kann auch ausreichen, lediglich Nutzerdaten N der Fahrer 22 der Kraftfahrzeuge 16 zu sammeln. Zum Sammeln benötigt das Backend 10 Angaben zum Fahrer 22, 24, wie Größe, Gewicht, Geschlecht, Alter. Dies sind Personendaten P. Natürlich kann das Sammeln der Personendaten P anonymisiert geschehen.

Weiterhin werden die Einstellungen der Komfortfunktionen gespeichert, das heißt Konfigurationsdaten K für die entsprechenden Komfortgeräte in den Kraftfahrzeugen 16, 18. Konfigurationsdaten K können beispielsweise beschreiben:
- Einstellung des Sitzes,
- Einstellung der Sitzheizung (auch nach der Zeit),
- Einstellung der Höhe des Gurtes,
- Einstellung der Spiegel,
- Einstellung des Lenkrads.

Die Nutzerdaten N werden an das Backend 10 gesendet und dort gespeichert.

Die Nutzerdaten N können auch zusätzlich mit Umfelddaten, wie Uhrzeit, Jahreszeit und Wetterinformationen angereichert werden. Zum Beispiel stellen manche Fahrer 22, 24 morgens eine andere Komforteinstellung ein als abends, weil durch das Schrumpfen ihrer Wirbelsäule beispielsweise andere Sitzeinstellungen bequemer sind.

Auch Umfelddaten betreffend die Region können gesammelt und berücksichtigt werden, um kulturelle oder marktspezifische Aspekte zu berücksichtigen.

Die gesammelten Nutzerdaten N können für jeden Fahrzeugtyp T1, T2 getrennt einer BigData-Analyse 26, 28 unterzogen werden. Die BigData-Analyse kann durch das Backend 10 durchgeführt werden. Algorithmen für BigData-Analysen sind an sich aus dem Stand der Technik bekannt.

Im Folgenden ist beispielhaft eine Ausführungsform für die BigData-Analyse 26 für den Fahrzeugtyp T1 beschrieben. Entsprechendes gilt ohne weitere Erläuterung für die BigData-Analyse 28 für den Fahrzeugtyp T2.

Die Nutzerdaten N der Fahrer 22 der Kraftfahrzeuge 16 vom Fahrzeugtyp T1 können durch die BigData-Analyse 26 beispielsweise als Datenpunkte in einem zwei- oder mehrdimensionalen Datenraum 30 eingetragen werden. Jeder Datenpunkt kann also Koordinaten aufweisen, die sich entlang unterschiedlicher Raumachsen des Datenraumes 30 für unterschiedliche Werte z.B. von Körpergröße, Körpergewicht und/oder Lebensalter in Bezug auf die Personendaten P und beispielsweise Sitzposition, Spiegeleinstellung, Klimatisierungstemperatur für jeweilige Raumachsen in Bezug auf die Konfigurationsdaten K ergeben. In Fig. 1 ist lediglich ein zweidimensionaler Datenraum 30 mit einer horizontalen Achse für Personendaten P und einer vertikalen Achse für Konfigurationsdaten K veranschaulicht.

Für die Personendaten P, beispielsweise die Körpergröße, können Intervalle oder Wertebereiche vorgesehen sein, um die Fahrer 22 in Personengruppen PG1, PG2, PG3 zu gruppieren. Beispielsweise kann die Personengruppe PG1 für Fahrer 22 mit der Körpergröße zwischen 150 Zentimeter und 160 Zentimeter, die Personengruppe PG 2 für die Körpergröße 160 Zentimeter bis 170 Zentimeter und die Personengruppe PG3 für 170 Zentimeter bis 180 Zentimeter vorgesehen sein. Es können von den empfangenen Nutzerdaten N der Fahrer 22 für jeden Fahrer 22 dessen Personendaten P und die zugehörigen Konfigurationsdaten K, beispielsweise die Sitzposition als Zentimeterangabe, in den Datenraum 30 eingetragen werden. So können sich Punktwolken oder Punkthäufungen 32 ergeben. In Fig. 1 sind der Übersichtlichkeit halber nur die Punktwolken 32 für die Personengruppe PG1 mit einem Bezugszeichen versehen. Die Einteilung der Datenpunkte in Punktwolken 32 kann beispielsweise mittels eines K-means-Algorithmus erfolgen, wie er an sich im Stand der Technik verfügbar ist. Als weitere Methode zum Aufteilen der Nutzerdaten N in einzelne Personengruppen PG1, PG2, PG3 und/oder Nutzertypen NT1, NT2, NT3 sind beispielsweise Hidden-Markov-Modelle geeignet.

Die Punktwolken 32 zeigen, dass Fahrer 22 derselben Personengruppe PG1 unterschiedliche Vorlieben beim Einstellen der Konfigurationsdaten haben können, obwohl die Fahrer 22 ähnlich groß sind, nämlich zur Personengruppe PG1 gehören. Diese Vorlieben, die durch die Punktwolken 32 repräsentiert sind, können als Nutzertypen NT1, NT2, NT3 definiert werden. Beispielsweise kann im Zusammenhang mit der Einstellung eines Fahrersitzes der Nutzertyp NT1 ein Steilsitzfahrer sein, der Nutzertyp NT2 den Fahrersitz in der bestimmungsgemäßen Weise eingestellt haben und der Nutzertyp NT3 beispielsweise ein Liegesitzfahrer sein, welcher die Rückenlehne des Fahrersitzes ungewöhnlich weit nach hinten neigt.

Für die Personengruppe PG1 gibt es also drei Nutzertypen NT1, NT2, NT3, von denen jeder für eine Punktwolke 32 steht. Jede Punktwolke 32 kann beispielsweise durch ihren geometrischen Schwerpunkt oder ihren statistischen Mittelwert K1, K2, K3 repräsentiert werden. Mit anderen Worten ergibt sich also für die Personengruppe PG1 ein Nutzertyp NT1, der Konfigurationsdaten K1 bevorzugt. Von der Personengruppe PG1 und Nutzertyp NT2 ergibt sich eine bevorzugte Einstellung mit Konfigurationsdaten K2. Entsprechendes gilt für die übrigen Punktwolken. Insgesamt ergibt sich so für den Fahrzeugtyp T1 eine Zuordnungsvorschrift 34, welche einen Zusammenhang zwischen Personendaten P und Konfigurationsdaten K beschreibt. Ergeben die Personendaten P, dass sich ein bestimmter Fahrzeugnutzer in der Personengruppe PG1 befindet und weist diese Person Vorlieben auf, die dem Nutzertyp NT3 entsprechen, so besagt die Zuordnungsvorschrift 34 beispielsweise, dass im statistischen Mittel oder erwartungsgemäß diese Person in einem Kraftfahrzeug des Fahrzeugtyps T1 die Konfigurationsdaten K3 bevorzugt.

Die Einteilung der Personengruppen PG1, PG2, PG3 in Nutzertypen NT1, NT2, NT3 ist aber nur optional. Es kann für jede Personengruppe PG1, PG2, PG3 auch eine einzige Einstellung von Konfigurationsdaten vorgesehen sein. Diese kann ebenfalls über die Punktwolken 32 ermittelt werden, also beispielsweise als Mittelwert der drei Konfigurationsdatensätze K1, K2, K3 für die Personengruppe PG1.

Entsprechend ergibt die BigData-Analyse 28 für den Fahrzeugtyp T2 eine Zuordnungsvorschrift 36 für die Personengruppen PG1, PG2, PG3 und die Nutzertypen NT1, NT2, NT3. Welche Punktwolken 32 aus dem Datenraum 30 der BigData-Analyse 26 den Punktwolken in der BigData-Analyse 28 entsprechen, kann beispielsweise durch einen Fachmann ermittelt werden, welcher beispielsweise von den Fahrern 22 und den Fahrern 24 durch Befragung herausfinden kann, welche Vorlieben sie beim Einstellen von Komfortgeräten haben. In dem in Fig. 1 veranschaulichten Beispiel ist davon ausgegangen, dass die Konfigurationsdaten K1 den Konfigurationsdaten K10 entsprechen, d.h. zum selben Nutzertyp NT1 gehören, und weitere Entsprechungen vorhanden sind, wie aus den Zuordnungsvorschriften 34, 36 ersehen werden können.

Bei der in Fig. 2 veranschaulichten zweiten Phase gibt es bereits eine Datenbank im Backend 10 mit genügender Größe und Umfang, um die im Folgenden beschriebenen Berechnungen zu ermöglichen. Mittels dieser Datenbank aus Nutzerdaten N können also die Zuordnungsvorschriften 34 und 36 bereits gebildet worden sein (siehe Fig. 1).

In einem ersten Anwendungsfall a gibt ein Fahrer 38 seine persönlichen Eigenschaften an, das heißt seine Personendaten NP. Der Fahrer 38 stellt einen Neubenutzer dar. Der Fahrer 38 möchte zunächst in einem Kraftfahrzeug 40 vom Fahrzeugtyp T1 fahren. Seine Personendaten NP können an das Backend 10 in der beschriebenen Weise übermittelt werden. Dadurch kann mittels der Zuordnungsvorschrift 34 (siehe Fig. 1) oder allgemein mittels der Datenbank aus den Personendaten NP die wahrscheinlich beste Einstellung der Komfortunktionen ermittelt werden und beim Einsteigen in das Kraftfahrzeug 40 eingestellt werden.

Falls zwischen Nutzertypen NT1, NT2, NT3 unterschieden wird, ist dieser Nutzertyp für den Fahrer 38 aber zunächst noch nicht bekannt. Daher kann zunächst ein "mittlerer Nutzertyp", also der Mittelwert für alle Nutzerdaten N (siehe Fig. 1) der Personengruppe, zu der der Fahrer 38 gehört, übermittelt werden. In dem in Fig. 2 veranschaulichten Beispiel ist davon ausgegangen, dass der Fahrer 38 Personendaten NP aufweist, durch welche der Fahrer 38 in einem ersten Überprüfungsschritt S1 des Backends 10 der Personengruppe PG1 zugeordnet wird. Im Schritt S2 wird überprüft, welcher Nutzertyp NT1, NT2, NT3 der Fahrer 38 ist. Da dies zunächst unbekannt ist, wird von dem mittleren Nutzertyp ausgegangen, also werden beispielsweise Konfigurationsdaten K2 des Nutzertyp NT2 an das Kraftfahrzeug 40 übermittelt und dort in den Komfortgeräten, beispielsweise dem verstellbaren Fahrersitz, eingestellt.

Die Personendaten NP des Fahrers 38 und die zu den Personendaten NP vom Backend bereitgestellten 10 Kenndaten K2 stellen zusammen Nutzerdaten NN des Neubenutzers, d.h. des Fahrers 38, dar. Dabei musste der Fahrer 38 nur seine Personendaten NP angeben. Die Nutzerdaten NN wurden vom Backend 10 automatisch um die Konfigurationsdaten K2 ergänzt.

Sollte der Fahrer 38 die Einstellungen verändern, können diese wieder an das Backend 10 als Delta-Kenndaten DK geschickt werden, um die Berechnung hinsichtlich persönlicher Vorlieben zu verbessern. In dem in Fig. 2 veranschaulichten Beispiel wird davon ausgegangen, dass durch die Delta-Kenndaten DK in einem Schritt S3 vom Backend 10 festgestellt werden kann, dass der Fahrer 38 vom Nutzertyp NT3 ist.

Wenn nun der Fahrer 38 mit einem anderen Fahrzeugtyp T2 fahren will, können die persönlichen Eigenschaften, die durch die Personendaten NP beschrieben sind, und die Einstellungen des ersten Fahrzeugs 40 verwendet werden, um die wahrscheinlichste Einstellung der Komfortfunktionen im zweiten Fahrzeugtyps T2 mittels des Backends 10 zu ermitteln.

Wie Fig. 2 ist gezeigt, will der Fahrer 38 in dem Beispiel ein Kraftfahrzeug 42 vom Fahrzeugtyp T2 benutzen. Anhand seiner Personendaten NP und der für ihn ermittelten Vorliebe, also dem Nutzertyp NT3, kann durch das Backend 10 ermittelt werden, dass für den Fahrer 38 die Konfigurationsdaten für den Nutzertyp NT3 benötigt werden. Mittels der Zuordnungsvorschrift 36 (siehe Fig. 1) kann durch das Backend 10 ermittelt werden, dass sich die Konfigurationsdaten K12 für den Fahrer 38 eignen (siehe Fig. 1). Die Konfigurationsdaten K12 können vom Backend 10 an das Kraftfahrzeug 42 übermittelt werden, so dass im Kraftfahrzeug 42 Komfortgeräte mittels der Konfigurationsdaten K12 eingestellt werden, so dass das Kraftfahrzeug 42 für den Fahrer 38 personalisiert wird.

Eine weitere Einsatzmöglichkeit b kann für den Fall vorgesehen sein, dass der Fahrer 38 keine persönlichen Eigenschaften angibt. Da keine Informationen über den Fahrer 38 bekannt sind, muss dieser in einem ersten Fahrzeug die Komfortfunktionen einstellen. Diese Einstellungen können im Backend 10 Rückschluss auf die wahrscheinlichen körperlichen Eigenschaften des Fahrers 38 geben. Danach kann auf Basis weiterer Daten aus dem Schwarm, also den Nutzerdaten N der Kraftfahrzeuge 16, 18, die Berechnung für weitere Fahrzeugtypen erfolgen. Nach der Initialisierungsphase müssen die anfänglich angegebenen Informationen also nicht mehr vom Fahrer gegeben werden, da die Schwarmintelligenz diese Informationen durch die erstmalige Einstellung des Sitzes errechnen kann.

Aufgrund von Personendaten kann über einen BigData-Ansatz die beste Empfehlung zur Einstellung ("best guest" - beste Schätzung) gegeben werden. Es wird eine Ähnlichkeitsbeziehung zwischen Fahrer/Gerätefunktion/Nutzer im BigData-Ansatz hergestellt, die sogar die Erstinitialisierung verbessern kann. BigData ist zentraler Aspekt dieser Analyse.

Insgesamt zeigt das Beispiel, wie durch die Erfindung eine BigData-basierte Ermittlung personalisierter körperspezifischer Komforteinstellungen realisiert werden kann.

## Patentansprüche

1. Verfahren zum Einstellen von Nutzerdaten (NN) eines Neubenutzers (38) in einem Kraftfahrzeug (40, 42) eines vorbestimmten Fahrzeugtyps (T1, T2), um das Kraftfahrzeug (40, 42) für den Neubenutzer (38) zu personalisieren, wobei die für die Personalisierung benötigten Nutzerdaten (NN) Personendaten (NP) des Neubenutzers (38) und Konfigurationsdaten (K2, K12) für zumindest ein Gerät des Kraftfahrzeugs (40, 42) umfassen, wobei bei dem Verfahren:
- von mehreren anderen Benutzern (22, 24) des Fahrzeugtyps (T1, T2) deren Personendaten (P) und von den Benutzern (22, 24) eingestellte Konfigurationsdaten (K) gesammelt werden und
- aus den gesammelten Personendaten (P) und den gesammelten Konfigurationsdaten (K) eine Zuordnungsvorschrift (34, 36) zwischen Personendaten (P) und Konfigurationsdaten (K) gebildet wird und
- von dem Neubenutzer (38) nur ein Teil der von ihm benötigten Nutzerdaten (NN) erfasst wird und
- die vom Neubenutzer (38) benötigten Nutzerdaten (NN) vervollständigt werden, indem noch fehlende Personendaten und/oder Konfigurationsdaten (K2, K12) auf der Grundlage des erfassten Teils der Nutzerdaten (NN) des Neubenutzers (38) und mittels der Zuordnungsvorschrift (34, 36) ermittelt werden, und
- die vervollständigten Nutzerdaten (NN) in dem Kraftfahrzeug (40, 42) bereitgestellt werden,
**dadurch gekennzeichnet, dass**
nach dem Einstellen der vervollständigten Nutzerdaten (NN) des Neubenutzers (38) in dem Kraftfahrzeug (40) eine von dem Neubenutzer (38) vorgenommene, Korrekturdaten (DK) ergebende Veränderung der Konfigurationsdaten (K2) ermittelt wird und in Abhängigkeit von den Korrekturdaten (DK) ein nutzerspezifischer Nutzertyp (NT3) ermittelt wird, welcher eine persönliche Vorliebe des Neubenutzers (38) betreffend die Nutzung des zumindest einen Geräts beschreibt, und bei einem Wechsel des Neubenutzer (38) von dem Kraftfahrzeug (40) zu einem anderen Kraftfahrzeug (42) eines anderen Fahrzeugtyps (T2) Konfigurationsdaten (K12) des anderen Kraftfahrzeugs (42) auf der Grundlage des Nutzertyps (NT3) eingestellt werden.

2. Verfahren nach Anspruch 1, wobei
- für unterschiedliche, vorbestimmte Nutzertypen (NT1, NT2, NT3) jeweilige Konfigurationsdaten (K1 bis K18) für den anderen Fahrzeugtyp (T2) bereitgestellt werden und
- mittels der Korrekturdaten (DK) der Neubenutzer (38) einem aus den Nutzertypen (NT1, NT2, NT3) zugeordnet wird und
- in Abhängigkeit von dem ermittelten Nutzertyp (NT3) des Neubenutzers (38) die bereitgestellten, zugehörigen Konfigurationsdaten (K12) in dem anderen Kraftfahrzeug (42) eingestellt werden.

3. Verfahren zum Einstellen von Nutzerdaten (NN) eines Neubenutzers (38) in einem Kraftfahrzeug (40, 42) eines vorbestimmten Fahrzeugtyps (T1, T2), um das Kraftfahrzeug (40, 42) für den Neubenutzer (38) zu personalisieren, wobei die für die Personalisierung benötigten Nutzerdaten (NN) Personendaten (NP) des Neubenutzers (38) und Konfigurationsdaten (K2, K12) für zumindest ein Gerät des Kraftfahrzeugs (40, 42) umfassen, wobei bei dem Verfahren:
- von mehreren anderen Benutzern (22, 24) des Fahrzeugtyps (T1, T2) deren Personendaten (P) und von den Benutzern (22, 24) eingestellte Konfigurationsdaten (K) gesammelt werden und
- aus den gesammelten Personendaten (P) und den gesammelten Konfigurationsdaten (K) eine Zuordnungsvorschrift (34, 36) zwischen Personendaten (P) und Konfigurationsdaten (K) gebildet wird und
- von dem Neubenutzer (38) nur ein Teil der von ihm benötigten Nutzerdaten (NN) erfasst wird und
- die vom Neubenutzer (38) benötigten Nutzerdaten (NN) vervollständigt werden, indem noch fehlende Personendaten auf der Grundlage des erfassten Teils der Nutzerdaten (NN) des Neubenutzers (38) und mittels der Zuordnungsvorschrift (34, 36) ermittelt werden, und
- die vervollständigten Nutzerdaten (NN) in dem Kraftfahrzeug (40, 42) bereitgestellt werden,
**dadurch gekennzeichnet, dass**
in dem Kraftfahrzeug (40, 42) durch den Neubenutzer (38) an dem zumindest einen Gerät eingestellte Konfigurationsdaten erfasst werden und mittels der Zuordnungsvorschrift (34, 36) Personendaten (NP) des Neubenutzers (38) ermittelt werden.

4. Verfahren nach Anspruch 3, wobei das Kraftfahrzeug zumindest ein erstes und ein zweites Gerät aufweist, die durch den Neubenutzer eingestellten Konfigurationsdaten an dem ersten Gerät erfasst werden und in Abhängigkeit von den ermittelten Personendaten mittels der Zuordnungsvorschrift Konfigurationsdaten für das zweite Gerät ermittelt werden und die ermittelten Konfigurationsdaten für das zweite Gerät bei diesem eingestellt werden.

5. Verfahren nach einem der vorhergehenden Ansprüche, wobei beim Sammeln der Konfigurationsdaten (K) der anderen Benutzer (22, 24) zusätzlich Umfelddaten gesammelt werden, welche angeben, in welchem Umfeld die anderen Benutzer (22, 24) jeweils die Konfigurationsdaten (K) einstellen, und beim Vervollständigen der Nutzerdaten (NN) des Neubenutzers (38) ermittelt wird, in welchem Umfeld sich das Kraftfahrzeug (40, 42) befindet, und die Nutzerdaten (NN) des Neubenutzers (38) mit Konfigurationsdaten für das ermittelte Umfeld ergänzt werden.

6. Verfahren nach einem der vorhergehenden Ansprüche, wobei von dem Neubenutzer (38) Personendaten (NP) erfasst werden und mittels der Zuordnungsvorschrift (34, 36) Konfigurationsdaten (K2, K12) für das zumindest eine Gerät ermittelt und in dem zumindest einen Gerät eingestellt werden.

7. Verfahren nach einem der vorhergehenden Ansprüche, wobei die Personendaten (P, NP) rein personenbezogene, fahrzeugunabhängig ermittelbare Daten sind und/oder
die Konfigurationsdaten (K, K1 bis K18) personenunabhängig ermittelbare Geräteeinstellungen des zumindest einen Geräts sind.

8. Servervorrichtung (10) für das Internet (12) mit einer Kommunikationseinrichtung (14) zum jeweiligen Austauschen von Nutzerdaten (N, NP) mit mehreren Kraftfahrzeugen (16, 18, 40, 42) eines vorbestimmten Fahrzeugtyps (T1, T2) und mit einer Prozessoreinrichtung, die dazu ausgelegt ist, ein Verfahren nach einem der vorhergehenden Ansprüche durchzuführen.

## Claims

1. Method for setting user data (NN) of a new user (38) in a motor vehicle (40, 42) of a predetermined vehicle type (T1, T2) in order to personalise the motor vehicle (40, 42) for the new user (38), wherein the user data (NN) required for the personalisation comprise personal data (NP) of the new user (38) and configuration data (K2, K12) for at least one unit of the motor vehicle (40, 42), wherein in the method:
- the personal data (P) of several other users (22, 24) of the vehicle type (T1, T2) and configuration data (K) set by the users (22, 24) are collected and
- an assignment rule (34, 36) between personal data (P) and configuration data (K) is formed from the collected personal data (P) and the collected configuration data (K) and
- only a part of the user data (NN) required from the new user (38) is detected, and
- the user data (NN) required from the new user (38) are completed by personal data and/or configuration data (K2, K12) which are still missing being determined on the basis of the detected part of the user data (NN) of the new user (38) and by means of the assignment rule (34, 36), and
- the completed user data (NN) are provided in the motor vehicle (40, 42),
**characterised in that**
after the setting of the completed user data (NN) of the new user (38) in the motor vehicle (40), a change in the configuration data (K2) made by the new user (38) and resulting in correction data (DK) is determined, and a user-specific user type (NT3) is determined depending on the correction data (DK) and describes a personal preference of the new user (38) regarding the use of the at least one unit, and, when the new user (38) changes from the motor vehicle (40) to another motor vehicle (42) of another vehicle type (T2), configuration data (K12) of the other motor vehicle (42) are set on the basis of the user type (NT3).

2. Method according to claim 1, wherein
- for different, predetermined user types (NT1, NT2, NT3), respective configuration data (K1 to K18) are provided for the other vehicle type (T2) and
- by means of the correction data (DK), the new user (38) is assigned to one of the user types (NT1, NT2, NT3) and
- depending on the determined user type (NT3) of the new user (38), the provided, associated configuration data (K12) are set in the other motor vehicle (42).

3. Method for setting user data (NN) of a new user (38) in a motor vehicle (40, 42) of a predetermined vehicle type (T1, T2) in order to personalise the motor vehicle (40, 42) for the new user (38), wherein the user data (NN) required for the personalisation comprise personal data (NP) of the new user (38) and configuration data (K2, K12) for at least one unit of the motor vehicle (40, 42), wherein in the method:
- the personal data (P) of several other users (22, 24) of the vehicle type (T1, T2) and configuration data (K) set by the users (22, 24) are collected and
- an assignment rule (34, 36) between personal data (P) and configuration data (K) is formed from the collected personal data (P) and the collected configuration data (K) and
- only a part of the user data (NN) required from the new user (38) is detected, and
- the user data (NN) required from the new user (38) are completed by personal data which are still missing being determined on the basis of the detected part of the user data (NN) of the new user (38) and by means of the assignment rule (34, 36), and
- the completed user data (NN) are provided in the motor vehicle (40, 42),
**characterised in that**
configuration data set in the motor vehicle (40, 42) by the new user (38) on the at least one unit are detected and personal data (NP) of the new user (38) determined by means of the assignment rule (34, 36).

4. Method according to claim 3, wherein the motor vehicle has at least a first and a second unit, the configuration data set by the new user are detected on the first unit and configuration data for the second unit are determined by means of the assignment rule depending on the determined personal data, and the determined configuration data are set for the second unit in said second unit.

5. Method according to any of the preceding claims, wherein, during the collection of the configuration data (K) of the other users (22, 24), environmental data are additionally collected indicating in which environment the other users (22, 24) respectively set the configuration data (K), and upon completion of the user data (NN) of the new user (38), the environment in which the motor vehicle (40, 42) is located it is determined, and the user data (NN) of the new user (38) are supplemented with configuration data for the determined environment.

6. Method according to any of the preceding claims, wherein personal data (NP) from the new user (38) are detected and configuration data (K2, K12) for the at least one unit are determined by means of the assignment rule (34, 36) and set in the at least one unit.

7. Method according to any of the preceding claims, wherein the personal data (P, NP) are purely person-related data that can be determined independently of the vehicle and/or
the configuration data (K, K1 to K18) are unit settings of the at least one unit and can be determined independently of the person.

8. Server device (10) for the Internet (12) with a communication apparatus (14) for exchanging user data (N, NP) with several motor vehicles (16, 18, 40, 42) of a predetermined vehicle type (T1, T2) and with a processor apparatus which is designed to perform a method according to any of the preceding claims.

## Revendications

1. Procédé de réglage de données d'utilisateur (NN) d'un nouvel utilisateur (38) dans un véhicule automobile (40, 42) d'un type de véhicule prédéterminé (T1, T2) afin de personnaliser le véhicule automobile (40, 42) pour le nouvel utilisateur (38), dans lequel les données d'utilisateur (NN) nécessaires à la personnalisation comprennent des données personnelles (NP) du nouvel utilisateur (38) et des données de configuration (K2, K12) pour au moins un appareil du véhicule automobile (40, 42), dans lequel lors du procédé :
- les données personnelles (P) de plusieurs autres utilisateurs (22, 24) du type de véhicule (T1, T2) et des données de configuration (K) réglées par les utilisateurs (22, 24) sont collectées et
- une prescription d'affectation (34, 36) entre les données personnelles (P) et les données de configuration (K) est formée à partir des données personnelles (P) collectées et des données de configuration (K) collectées et
- seule une partie des données d'utilisateur (NN) qui lui sont nécessaires sont saisies du nouvel utilisateur (38) et
- les données d'utilisateur (NN) nécessaires du nouvel utilisateur (38) sont complétées, par le fait que des données personnelles et/ou données de configuration (K2, K12) encore manquantes sont déterminées sur la base de la partie saisie des données d'utilisateur (NN) du nouvel utilisateur (38) et au moyen de la prescription d'affectation (34, 36), et
- les données d'utilisateur (NN) complétées sont mises à disposition dans le véhicule automobile (40, 42),
**caractérisé en ce que**
après le réglage des données d'utilisateur (NN) complétées du nouvel utilisateur (38) dans le véhicule automobile (40), une modification des données de configuration (K2) effectuée par le nouvel utilisateur (38), donnant des données de correction (DK) est déterminée et un type d'utilisateur propre à l'utilisateur (NT3) est déterminé en fonction des données de correction (DK), lequel décrit une préférence personnelle du nouvel utilisateur (38) concernant l'utilisation de l'au moins un appareil, et en cas de changement du nouvel utilisateur (38) du véhicule automobile (40) à un autre véhicule automobile (42) d'un autre type de véhicule (T2), des données de configuration (K12) de l'autre véhicule automobile (42) sont réglées sur la base du type d'utilisateur (NT3).

2. Procédé selon la revendication 1, dans lequel
- des données de configuration respectives (K1 à K18) pour l'autre type de véhicule (T2) sont mises à disposition pour différents types d'utilisateur prédéterminés (NT1, NT2, NT3) et
- le nouvel utilisateur (38) est associé à un des types d'utilisateur (NT1, NT2, NT3) au moyen des données de correction (DK) et
- les données de configuration (K12) associées, mises à disposition sont réglées dans l'autre véhicule automobile (42) en fonction du type d'utilisateur déterminé (NT3) du nouvel utilisateur (38).

3. Procédé de réglage de données d'utilisateur (NN) d'un nouvel utilisateur (38) dans un véhicule automobile (40, 42) d'un type de véhicule prédéterminé (T1, T2) afin de personnaliser le véhicule automobile (40, 42) pour le nouvel utilisateur (38), dans lequel les données d'utilisateur (NN) nécessaires à la personnalisation comprennent des données personnelles (NP) du nouvel utilisateur (38) et des données de configuration (K2, K12) pour au moins un appareil du véhicule automobile (40, 42), dans lequel lors du procédé :
- les données personnelles (P) de plusieurs autres utilisateurs (22, 24) du type de véhicule (T1, T2) et des données de configuration (K) réglées par les utilisateurs (22, 24) sont collectées et
- une prescription d'affectation (34, 36) entre les données personnelles (P) et les données de configuration (K) est formée à partir des données personnelles (P) collectées et des données de configuration (K) collectées et
- seule une partie des données d'utilisateur (NN) qui lui sont nécessaires sont saisies du nouvel utilisateur (38) et
- les données d'utilisateur (NN) nécessaires du nouvel utilisateur (38) sont complétées, par le fait que des données personnelles encore manquantes sont déterminées sur la base de la partie saisie des données d'utilisateur (NN) du nouvel utilisateur (38) et au moyen de la prescription d'affectation (34, 36), et
- les données d'utilisateur (NN) complétées sont mises à disposition dans le véhicule automobile (40, 42),
**caractérisé en ce que**
des données de configuration réglées dans le véhicule automobile (40, 42) par le nouvel utilisateur (38) au niveau de l'au moins un appareil sont saisies et des données personnelles (NP) du nouvel utilisateur (38) sont déterminées au moyen de la prescription d'affectation (34, 36).

4. Procédé selon la revendication 3, dans lequel le véhicule automobile présente au moins un premier et un deuxième appareil, les données de configuration réglées par le nouvel utilisateur sont saisies au niveau du premier appareil et des données de configuration pour le deuxième appareil sont déterminées en fonction des données personnelles déterminées au moyen de la prescription d'affectation et les données de configuration déterminées pour le deuxième appareil sont réglées sur celui-ci.

5. Procédé selon l'une quelconque des revendications précédentes, dans lequel lors de la collecte des données de configuration (K) des autres utilisateurs (22, 24), des données d'environnement sont collectées en plus, lesquelles indiquent, dans quel environnement les autres utilisateurs (22, 24) règlent respectivement les données de configuration (K), et lors du complètement des données d'utilisateur (NN) du nouvel utilisateur (38), il est déterminé dans quel environnement se trouve le véhicule automobile (40, 42), et les données d'utilisateur (NN) du nouvel utilisateur (38) sont complétées avec des données de configuration pour l'environnement déterminé.

6. Procédé selon l'une quelconque des revendications précédentes, dans lequel des données personnelles (NP) du nouvel utilisateur (38) sont saisies et des données de configuration (K2, K12) sont déterminées pour l'au moins un appareil et réglées dans l'au moins un appareil au moyen de la prescription d'affectation (34, 36).

7. Procédé selon l'une quelconque des revendications précédentes, dans lequel les données personnelles (P, NP) sont des données purement personnelles, pouvant être déterminées indépendamment du véhicule et/ou
les données de configuration (K, K1 à K18) sont des réglages d'appareil de l'au moins un appareil pouvant être déterminés indépendamment de la personne.

8. Dispositif de serveur (10) pour Internet (12) avec un dispositif de communication (14) pour le remplacement respectif de données d'utilisateur (N, NP) avec plusieurs véhicules automobiles (16, 18, 40, 42) d'un type de véhicule prédéterminé (T1, T2) et avec un dispositif de processeur, qui est conçu pour effectuer un procédé selon l'une quelconque des revendications précédentes.
